(19) **Europäisches Patentamt**
**European Patent Office**
**Office européen des brevets**

(11) Veröffentlichungsnummer : **0 305 484 B1**

# (12) EUROPÄISCHE PATENTSCHRIFT

(45) Veröffentlichungstag der Patentschrift :
**03.07.91 Patentblatt 91/27**

(51) Int. Cl.$^5$ : **G01L 5/10**

(21) Anmeldenummer : **88902832.0**

(22) Anmeldetag : **16.03.88**

(86) Internationale Anmeldenummer :
**PCT/EP88/00208**

(87) Internationale Veröffentlichungsnummer :
**WO 88/07184 22.09.88 Gazette 88/21**

(54) **EINRICHTUNG ZUR MESSUNG EINER ZUGKRAFT MIT HILFE EINES ZUGKRAFT-MESSWERTGEBERS.**

(30) Priorität : **18.03.87 DE 3708748**

(43) Veröffentlichungstag der Anmeldung :
**08.03.89 Patentblatt 89/10**

(45) Bekanntmachung des Hinweises auf die
Patenterteilung :
**03.07.91 Patentblatt 91/27**

(84) Benannte Vertragsstaaten :
**AT BE CH DE FR GB IT LI LU NL SE**

(56) Entgegenhaltungen :
**DE-A- 2 900 770**
**FR-A- 2 560 681**
**US-A- 3 129 394**

(73) Patentinhaber : **Peter Lancier**
**Maschinenbau-Hafenhütte GmbH & Co. KG**
**Petersheide 37**
**W-4400 Münster-Wolbeck (DE)**

(72) Erfinder : **VEMMER, Helmut**
**Ohligser Strasse 1**
**W-5600 Wuppertal (DE)**

(74) Vertreter : **Hoffmeister, Helmut, Dr. Dipl.-Phys.**
**Patentanwalt Goldstrasse 36**
**W-4400 Münster (DE)**

## Beschreibung

Die Erfindung betrifft eine Einrichtung zur Messung einer Zugkraft, die während einer Kabelverlegung mit Hilfe eines zwischen dem Kabel und einem Stahl-Zugseil angeordneten Zugkraft-Meßwertgebers gemessen wird, gemäß dem Oberbegriff des Anspruches 1.

Es sind Einrichtungen (FR-A1-2 560 681) zur Messung einer Zufkraft mit Hilfe eines Zugkraft-Meßwertgebers bekannt, bei denen der Zufkraft-Meßwertgeber zwischen dem Kabel-Zugseil und dem eigentlichen Kabel eingesetzt ist. Der Zugkraft-Meßwertgeber wandelt die gemessenen Zugkräfte in ein frequenz-moduliertes Signal, das über das aus Metall bestehende Zugsseil selbst übertragen wird. Eine zweite Leitung wird über das Erdreich geschaffen, wobei Erder im Bereich der Meßwinde verwendet werden. Eine weitere Übertragung der Signale erfolgt durch kapazitive Kopplung an Erde, wobei die Restkapazität zwischen der Erde und eines Drehkopfes, der das Kabel trägt, genutzt wird.

Die bekannte Einrichtung offenbart damit zwar eine kapazitive Kopplung zwischen metallenen Teilen, die in Verbindung mit dem Kabel stehen, und der Erde. Es ist jedoch eine von dem Erdreich galvanisch getrennte Windenaufstellung und eine isolierte Aufstellung der Meßwertstation erforderlich. Die bekannte Einrichtung ist daher gegen Kurzschlüsse in der Meßanordnung insgesamt sehr empfindlich. Darüber hinaus ist nachteilig, daß ein Erder, der üblicherweise ein Staberder ist, immer einen frei zugänglichen Bodenbereich erfordert. Bei gepflasterten und geteerten oder sonstwie abgedecktem Erdreich ist ein Zugang nur sehr schwierig zu schaffen. Da es sich bei der Kabelverlegung im allgemeinen um "fliegende Baustellen" handelt, nimmt das Einschlagen der Staberder und das Beseitigen der damit entstandenen Schäden oft eine unverhältnismäßig große Zeit in Anspruch.

Es stellt sich demnach die Aufgabe, eine Einrichtung der eingangs genannten Art dahingehend zu verbessern, die Zeit des Auf- und Abbauens der Meß- und Einziehstationen zu verkürzen und zum anderen die Störanfälligkeit während des Einziehens und Messens zu vermindern.

Diese Aufgabe wird bei einer Einrichtung zur Messung einer Zugkraft gemäß Oberbegriff des Anspruches 1 dadurch gelöst, daß die Übertragung der Meßsignale vom Erdreich zum Meßwert-Empfänger kapazitiv durch einen vom Erdreich einerseits und eine vom Erdreich isolierte, auf dem Erdboden auslegbare Elektrode andererseits gebildeten zweiten Kondensator erfolgt.

Bei der vorstehend genannten Einrichtung sind Meßwertgeber, die Übertragungsstrecken und der Meßwertempfänger so aufeinander abgestimmt, daß eine Übertragungsdistanz von 3000 m Länge überbrückt werden kann. Dabei kann der Zugkraft-Meßwertgeber und der Meßwertempfänger im Prinzip jeder beliebigen Einziehwinde zugeordnet werden. Der Vorteil der vorstehend genannten kapazitiven Ein- und Auskopplung des Meßwertsignales über eine Erdverbindung liegt darin, daß auf galvanische Staberder verzichtet werden kann.

Ein weiterer Vorteil der Einrichtung ist, daß von den an sich vorhandenen Gegebenheiten bei der Kabelverlegung in vorteilhafter Weise Gebrauch gemacht werden kann, wie dies in den Unteransprüchen beschrieben worden ist.

Handelt es sich, wie üblich, bei der Verlegung um Kabel, die wenigstens eine isolierte metallische Ader oder einen Schutzschirm enthalten, so kann das Kabelende von einer elektrisch leitfähigen hülsen- oder netzartigen Vorrichtung auf einem Teil seiner Länge umfangen werden, wobei diese mit dem Meßschaltkreis leitend verbunden ist und einen ersten Kondensator bildet. Die metallische Ader des Kabels bildet auf der übrigen Länge des Kabels eine Kondensatorelektrode gegenüber dem Erdreich. Als hülsen- oder netzartige Vorrichtung kann ein üblicher, metallischer Kabel-Ziehstrumpf verwendet werden.

Auf der Seite des Meßwertempfängers wird mit dem Eingang des Empfängers eine isolierte, auf den Erdboden auslegbare Elektrode, vorzugsweise eine Plattenelektrode verbunden, die vorzugweise aus leitfähigem Gummi hergestellt ist, der gegebenenfalls außenseitig isoliert ist.

Es kann sich auch um eine Art Gummimatte handeln, das heißt um eine Matte, bei der eine oder mehrere Plattenelektroden in einen nicht-leitenden Elastomer eingebettet sind, wobei die Metallteile selbst ebenfalls flexibel sind.

Es hat sich herausgestellt, daß die kapazitiv koppelnden Metallflächen der Plattenelektrode zwischen 2000 und 20.000 cm² liegen sollten, um eine ausreichende Übertragung bei den vorgenannten Längen zu gewährleisten. Von diesen Werten kann nach Bedarf und Bodenbeschaffenheit auch abgewichen werden.

Damit wird bei der Einrichtung gemäß Erfindung vorzugsweise die kapazitive Erdverbindung einerseits über eine kapazitive Verbindung des Ziehstrumpfes mit dem Fernmeldekabel hergestellt, das seinerseits wiederum eine kapazitive Verbindung zum Erdreich herstellt, und andererseits durch eine leitfähige Gummimatte hergestellt, die im Bereich des Meßempfängers auf dem Erdobden liegt und über eine Drahtverbindung mit dem Meßempfänger verbunden ist. So sind alle wesentlichen Kopplungen der Leitung über das Erdreich kapazitiv.

Weitere Vorteile der vorgenannten Eindrichtung ergeben sind, wenn der Meßwertempfänger nur einen elektrisch isolierten Eingang besitzen muß und daß dieser mit der Plattenelektrode verbunden ist. Eine galvansiche Trennung des Meßwertgehäuses von der Ziehwinde ist damit nicht mehr erforderlich. Daraus folgt, daß das über das Zugseil übertragene Signalpotential vorzugsweise auf dem Massepotential des Meßwertempfängers liegt.

In einer nicht-vorveröffentlichten deutschen Anmeldung des Anmelders (P 37 08 749.5) wird ein Zugkraft-Meßwertgeber beschrieben, der aus zwei über ein leitfähiges Stahlseil verbundenen Metallgehäusen besteht, wobei ein Akkumulator in das zweite und die übrigen Teile des Meßschaltkreises in das erste Gehäuse eingebaut sind. Bei Verwendung eines derartigen Zugkraft-Meßwertgebers stellen die beiden Metallgehäuse zwei voneinander isolierte Pole A und B dar, zwischen denen die Wechselspannung des Meßsignals anliegt. Darüber hinaus können die beiden Gehäuse an ihren äußeren Enden mit mechanischen Kupplungsvorrichtungen, z.B. Zugösen, versehen sein.

Ein weiterer Vorteil ist, daß die beiden Gehäuse als isolierte Pole A und B mit Kontaktelektroden eines Aufladegenerators für den Akkumulator galvanisch verbindbar sind.

Schließlich ist noch vorteilhaft, daß das Massepotential des Meßwertempfängers mit dem verhandenen Chassis der Ziehwinde verbunden und daß die Stromversorgung des Meßwertempfängers direkt aus einem Starter-Akkumulator der Ziehwinde, d.h. ohne DC-DC-Potentialtrennung erfolgen kann.

Ein Ausführungsbeispiel der Einrichtung und Einzelheiten dazu sind in der Zeichnung dargestellt. Die Figuren der Zeichnung zeigen im einzelnen :

Figur 1    in schematisierter Darstellung die Einzelteile der Einrichtung in einem Ausführungsbeispiel ;
Figur 2    schematisiert eine Darstellung des Zugkraft-Meßwertgebers.

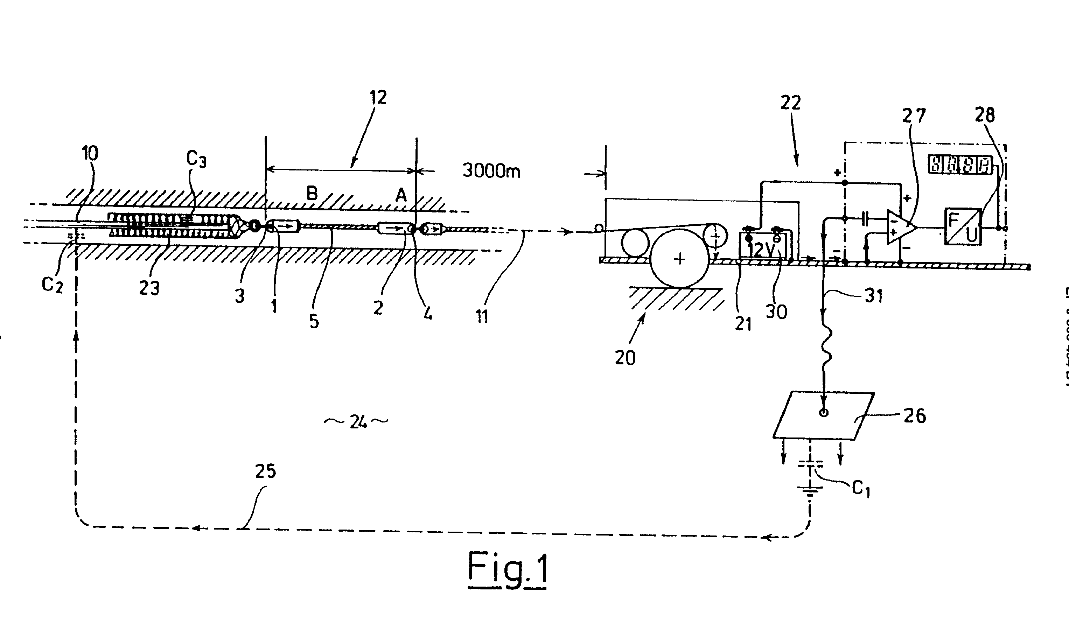

In der Figur 1 ist eine Einrichtung zur Messung einer Zugkraft, die während einer Kabelverlegung mittels eines zwischen einem Fernmeldekabel 10 und einem Stahl-Zugseil angeordneten Zugkraft-Meßwertgebers 12 gemessen wird. Es handels sich bei den vorgenannten Fernmeldekabeln um zugempfindliche Kabel, die in Kabelkanäle, Rohre und dergleichen eingezogen werden. Es sei aber angemerkt, daß anstelle eines Kabels auch entsprechend ausgestattete Stahlseile, flexible Rohre, Starkstromkabel und dergleichen verlegt werden können.

Der eigeltiche Zugkraft-Meßwertgeber 12 besteht aus zwei Gehäusen 1, 2, die an ihren äußeren Enden mit Zugösen 3, 4 versehen sind. Die inneren Enden der beiden Gehäuse 1 und 2 sind durch ein über wenigstens zwei Leiter verfügendes Stahlseil 5 verbunden. Das Gehäuse 1 enthält dabei die wesentlichen Teile eines Meßschaltkreises, während das Gehäuse 2 lediglich den für die Stromversorgung des Meßschaltkreises dienenden Akkumulator 6 einschließt.

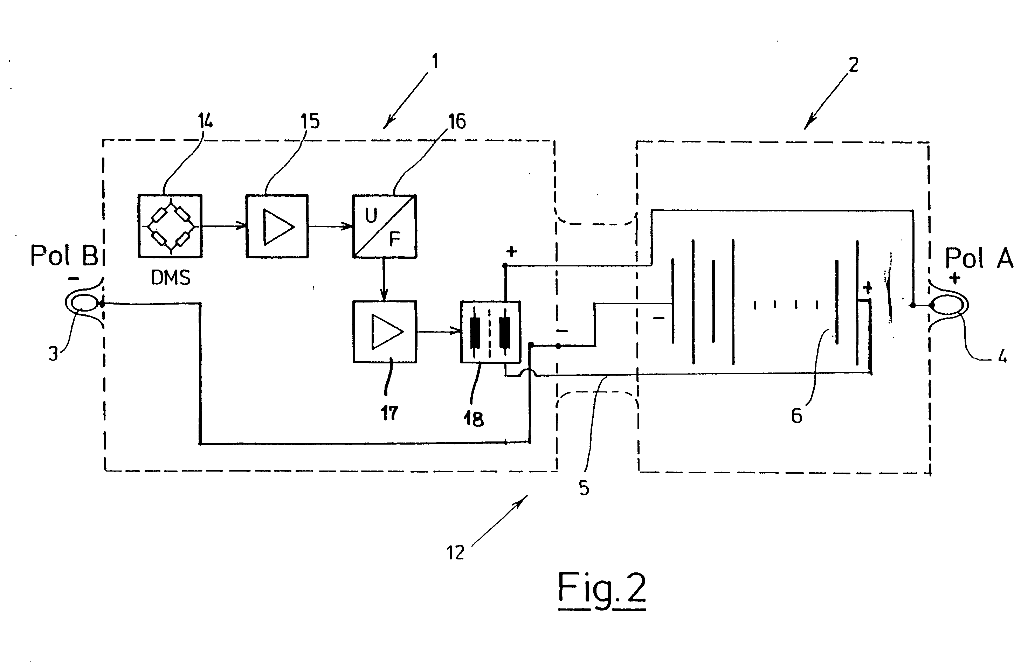

In Figur 2 ist stark schematisiert der Zugkraft-Meßwertgeber dargestellt, der aus den genannten drei Teilen
– Gehäuse 1 mit Meßschaltkreis,
– Gehäuse 2 mit Akkumulator 6 und
– Stahlseil 5 besteht.

Das Meß- und Übertragungsverfahren beruht darauf, daß im Zugkraft-Meßwertgeber 12 mittels eines Dehnungsmeßstreifens 14 die zwischen den beiden Zugösen 3 und 4 herrschende Zugkraft gemessen wird. Diese Zugkraft wird vom Dehnungsmeßstreifen 14 abgefühlt und als elektrisches Spannungs-Signal einem nachgeschalteten Vorverstärker 15 übertragen. Eine Zugkraft-Änderung dieses Dehnungsmeßstreifens bewirkt eine Spannungsänderung am Brückenausgang.

Nach der Verstärkung dieses Signals im Vorverstärker 10 wird es einem Spannungs-Frequenz-Wandler 16 zugeführt. Diese Spannungs-Frequenz-Wandler arbeitet üblicherweise mit einer niederfrequenten Wechselspannung von etwa 10 kHz. Es hat sich jedoch gezeigt, daß auch bei Abweichungen von diesen Werten, wobei mit Meßsignal-Trägerfrequenzen zwischen 3-100 kHz gearbeitet wird, zuverlässige Meßergebnisse geliefert werden.

Die vom Dehnungsmeßstreifen 14 empfangenen Signale dienen demnach zur proportionalen Frequenzmodulation in Abhängigkeit von der Zugkraft. Das frequenzmodulierte Ausgangssignal vom Spannungs-Frequen-Wandler 16 wird einem Übertragungskreis zugeführt, der im vorliegenden Fall einen Endverstärker 17 und einen Übertrager 18 umfaßt. Der Übertrager 18 dient zur Potentialtrennung sowie zur Anpassung und Steuerung des Endverstärkers 17. Am Ausgang des Übertragers steht demnach ein Signal S zur Verfügung, das zu übertragen ist.

Das niederfrequente Wechsespannungssignal S gelangt an die Zugöse 4 und damit an den Pol A. An diesen Pol A ist das Stahl-Zugseil 11 eingehängt. Dieses Stahl-Zugseil 11 wird über eine Winde 20 geführt, die in an sich bekannter Weise ausgeführt ist und über einen getrennten, motorischen Antrieb verfügt. Die Winde 20 ist mit einem leitfähigen Chassis 21 ausgerüstet. Sie ist in der Regel gegenüber dem Erdreich isoliert. Demnach liegt das über das Zugseil 11 übertragene Signalpotential auf dem Massepotential eines Meßwertempfängers 22. Das weitere Signalpotential vom Zugkraft-Meßwertgeber 12 wird über den Pol B übertragen. Der Pol B ist galvanisch mit einem metallischen Kalb-Ziehstrumpf 23 verbunden, der in aufgestauchtem Zustand über den Anfang des Fernmeldekabels 10 gezogen werden kann und sich nach dem Straffen in einem Reibungsschluß mit diesem verbindet. Der metallische Ziehstrumpf und das wenigstens eine isolierte metallische Ader oder einen Schutzschirm enthaltende Kabel 10 bilden demnach einen ersten Kondensator und ermöglichen eine kapazitive Verbindung zum Kabel. Diese kapazitive Verbindung ist mit $C_3$ und durch ein Kondensator-Symbol gekennzeichnet.

Einen weiteren Teil der Übertragungsstrecke bildet eine Kapazität $C_2$ zur Erde. Die Ader des Kabels 10 und die sie einbettende Isolierung bilden eine Kondensator-Anordnung gegenüber dem Erdreich 24. Auch diese kapazitive Verbindung ist mit einem Kondensator-Symbol gekennzeichnet. Gestrichelt ist die Erdrückleitung 25 dargestellt.

Die kapazitive Aufnahme im Bereich des Meßwertempfängers 22 wird durch eine galvanisch gegenüber der Erde isoliert auf dem Erdboden ausgelegte Plattenelektrode 26 gebildet. Die Plattenelektrode besteht im vorliegenden Falle aus leitfähigem Gummi, wie dieser an sich bekannt ist, der von einer nichtleitenden Kunststoffmasse eingebettet ist.

Hierdurch ergibt sich eine weitere Kapazität $C_1$, also die kapazitive Verbindung zum Erdreich im Bereich des Meßwertempfängers 22.

Im Meßwertempfänger 22 ist ein selektiver Verstärker 27 enthalten, der das durch die Übertragungsstrecke stark gedämpfte Meßwertsignal anhebt und ein "sauberes" Meßsignal mit konstanter Amplitude liefert. Derartige Schaltkreise können in verschiedener Art ausgeführt werden und sind dem Fachmann an sich bekannt. Das aufbereitete Signal wird einem Frequenz-Spannungs-Wandler 28 zugeführt, der das Meßsignal wiederum als proportionale Spannungsänderung einem weiteren Meßkreis zur Verfügung stellt.

In dem weiteren Schaltkreis erfolgt überlicherweise eine digitale Weiterverarbeitung der gewonnenen Meßspannung zur Registrierung des Meßsignales und zur Steuerung der Kabelziehwinde.

Die Eingänge des Verstärkers 27 sind so geschaltet, daß der positive Eingang des Differenzverstärkers auf Massepotential liegt. Das Massepotential des Differenzverstärkers ist gleichzeitig Minuspotential der Stromversorgung des Empfängers, da dieser mit unsymmetrischer Einfach-Betriebsspannung arbeitet. Demnach liegt das Gehäuse 29 des Meßwertempfängers 22 auf Massepotential. Es ist gleichzeitig mit dem Chassis 21 der Kabelziehwinde 20 verbunden, so daß die Stromversorgung des Meßwertempfängers 22 direkt aus dem vorhandenen Akkumulator 30 der Kabelziehwinde erfolgen kann. Hierdurch werden Schwierigkeiten mit den verschiedenen Potentialen vermieden. Das Massepotential des Meßwertempfängers 22 ist leitend über das Chassis 21 zum Stahl-Zugseil 11 verbunden, so daß der Meßwertempfänger 22 einpolig galvanisch mit dem Pol A des Zugkraft-Meßwertgebers verbunden ist.

Der mit "–" bezeichnete invertierende Pol des Verstärkers 28 ist isoliert über eine Steckverbindung herausgeführt und mit der Plattenelektrode 26 über eine Leitung 31 verbunden. Dieser Anschluß stellt demnach den eigentlichen Meßempfängereingang dar. Die Plattenelektrode 26 ist demnach eine Art Antenne des Meßwertempfängers ; sie ist jedoch nicht im Sinne einer elektromagnetischen Antenne eingesetzt, sondern stellt lediglich ein Glied der kapazitiven Kopplung des Verstärkers 27 mit dem Zugkraft-Meßwertgeber 12 dar.

Da am Eingang des Meßwertempfängers 22 eine Wechselspannung anliegt, ist die Polarität der beiden Leitungen wechselnd und prinzipiell nicht als "+" oder "–" zu definieren. Demzufolge spielt es keine Rolle, ob das Potential des Stahlseils, das gleichzeitig auf dem Potential des Chassis 21 liegt, als "heißer Anschluß" betrachtet wird, der auf den isolierten Meßempfängereingang zu legen ist, während das Potential der Plattenelektrode 26 auf Massepotential des Empfängers zu schalten wäre, oder ob ein umgekehrter Anschluß erfolgt. In jedem Falle gelangt das Potentialgefälle zwischen dem Stahl-Zugseil 11 und der Plattenelektrode 26 als steuernde Wechselspannung auf den Eingang des Meßwertempfängers 22, sofern der entsprechende Eingang des Meßwertempfängers gegenüber der Kabelziehwinde 20 isoliert ist und auch eine galvanisch getrennte Stromversorgung aufweist.

Im praktischen Betrieb ist es jedoch sehr nachteilig, wenn eine galvanische Trennung der Stromversorgung erforderlich wird. Außerdem hat es sich gezeigt, daß Empfangsbeeinträchtigungen zu befürchten sind, wenn das Gehäuse des Meßwertempfängers 22 gegenüber dem Chassis 21 der Kabelziehwinde isoliert aufzustellen ist. Das Übertragungsverfahren gemäß Erfindung arbeitet deshalb so, daß die Plattenelektrode 26 auf den isolierten, invertierenden Empfängereingang geschaltet wird. In dieser Konfiguration werden keinerlei Potentialtrennungen benötigt. Der Meßwertempfänger 22 kann direkt an den Akkumulator 30 der Kalbeziehwinde 20 angeschlossen werden. Selbstverständlich darf auch das Gehäuse des Meßwertempfängers 22 mit dem Chassis 21 in Berührung kommen, da beide Potentiale über den Minuspol des Akkumulators 30 bereits verbunden sind.

Ein weiterer Vorteil ergibt sich dadurch, daß die Verbindung zum Zugseil 11 über den Minuspol des Akkumulators 30 ebenfalls automatisch hergestellt ist. Bei diesem Systemaufbau ist es daher nur noch erforderlich, daß die flexible isolierte Plattenelektrode mit einer isolierten flexiblen Zuleitung 31 versehen ist und als "heißer Anschluß" an den isolierten Eingang des Meßwertempfängers 22 gesteckt werden kann.

Auf dem Wege der Erdleitung sind drei Kapazitäten $C_1$, $C_2$ und $C_3$ in Serie geschaltet. Demnach ist vor allem die Kapazität der Ziehstrumpf-Kabel-Verbindung $C_3$ und die Kapazität der Plattenelektrode 26 für die Dämpfung des Nutzsignals verantwortlich. Es hat sich gezeigt, daß unter Berücksichtigung einer Mindest-Nutzsignalamplitude am Eingang des Meßwertempfängers 22 von minimal 70 µV für die beschriebene Einrichtung ein Ziehstrumpf 23 von etwa 100 cm Länge (üblich 75-120 cm) und eine Plattenelektrode mit ca. 0,5 m² = 5000 cm² koppelnder Metallfläche erforderlich ist. Die Verluste des Systems können durch entsprechende elektronische Elemente wieder kompensiert werden, so daß ein verarbeitungsfähiges Signal mit auswertbarem Signal-Rausch-Verhältnis zurückgewonnen werden kann.

Wie aus der Figur 2 hervorgeht, besteht der Zugkraft-Meßwertgeber 12 aus den beiden bereits beschriebenen Gehäusen 1, 2, die durch ein Stahlseil 5 miteinander verbunden sind. Das Stahlseil mit seinen beiden voneinander isolierter Leitungen ist so mit den Gehäusen 1 und 2 verbunden, daß diese zwei voneinander isolierte Pole A und B darstellen. Diese beiden Pole A und B stellen gleichzeitig die Ladeanschlüsse für den intern eingebauten Akkumulator 6 dar, so daß in den Arbeitspausen Kontaktelektroden eines Aufladegerätes galvanisch mit den Polen A und B verbunden und der Akkumulator 6 aufgeladen werden kann.

**Ansprüche**

1. Einrichtung zur Messung einer Zugkraft, die während einer Kabelverlegung mit Hilfe eines zwischen dem Kabel (10) und einem Stahl-Zugseil (11) angeordneten Zugkraft-Meßwertgebers (12) gemessen wird, wobei letzterer einen Kraftmeßfühler (14) und einen Meßschaltkreis (1) umfaßt, der die vom Kraftmeßfühler empfangenen Signale verstärkt und in frequenzmodulierte, zugkraftproportionale Meßsignale umwandelt, die zu einem üblicherweise im Bereich einer Ziehwinde (20) aufgestellten Meßwertempfänger (22) geleitet werden, wobei eine erste Leitung zum Meßwertempfänger (22) das Zugseil (11) und eine zweite Leitung das Erdreich (24) einschließt, und bei der die über die zweite Leitung geführten Meßsignale kapazitiv über eine das Erdreich als Elektrode einschließenden ersten Kondensator auf das Erdreich übertragen werden, **gekennzeichnet** durch einen vom Erdreich einerseits und eine vom Erdreich isolierte, auf dem Erdboden auslegbare Elektrode (26) andererseits gebildeten zweiten Kondensator ($C_1$), über den eine kapazitive die Übertragung der Meßsignale vom Erdreich zum Meßwertempfänger (22) erfolgt.

2. Einrichtung nach Anspruch 1, dadurch gekennzeichnet, daß eine weitere Elektrode des ersten Kondensators ($C_2$) durch metallische Teile des Kabels (10) gebildet wird.

3. Einrichtung nach Anspruch 1 oder 2, dadurch gekennzeichnet, daß die Trägerfrequenz des Meßsignales zwischen 3 und 100 kHz liegt.

4. Einrichtung nach wenigstens einem der Ansprüche 1 bis 3, dadurch gekennzeichnet, daß das Kabel (10) von einer elektrisch leitfähigen hülsen- oder netzartigen Vorrichtung (23) auf einem Teil seiner Länge umfangen ist, die mit dem Meßschaltkreis (22) leitend verbunden ist und hierdurch eine erste Kapazität ($C_3$) gebildet ist.

5. Einrichtung nach Anspruch 4, dadurch gekennzeichnet, daß die hülsen- oder netzartige Vorrichtung ein metallischer Kabel-Ziehstrumpf (23) ist.

6. Einrichtung nach wenigstens einem der Ansprüche 1 bis 5, dadurch gekennzeichnet, daß die auf dem Erdboden auslegbare Elektrode eine Plattenelektrode (26) ist.

7. Einrichtung nach Anspruch 6, dadurch gekennzeichnet, daß die Plattenelektrode (26) aus isoliertem, leitfähigem Gummi besteht.

8. Einrichtung nach Anspruch 6 oder 7, dadurch gekennzeichnet, daß die Plattenelektrode (26) aus in ein Elastomer eingebetteten flexiblen Metallteilen besteht.

9. Einrichtung nach wenigstens einem der Ansprüche 6 bis 8, dadurch gekennzeichnet, daß die kapazitiv koppelnde Fläche der Plattenelektrode (26) zwischen 2000 und 20.000 cm² liegt.

10. Einrichtung nach wenigstens einem der Ansprüche 1, 6 bis 9, dadurch gekennzeichnet, daß der Meßwertempfänger (22) nur einen elektrisch isolierten Eingang besitzt und daß dieser mit der Plattenelektrode (26) verbunden ist.

11. Einrichtung nach wenigstens einem der Ansprüche 1 bis 10, dadurch gekennzeichnet, daß das über das Zugseil (11) übertragene Signalpotential auf dem Massepotential des Meßwertempfängers (22) liegt.

12. Einrichtung nach einem der vorhergehenden Ansprüche, dadurch gekennzeichnet, daß das Massepotential des Meßwertempfängers (22) mit dem vorhandenen Chassis (21) der Ziehwinde (20) verbunden ist und daß die Stromversorgung des Meßwertempfängers (22) direkt aus einem Starter-Akkumulator (30) der Ziehwinde (20) erfolgt.

## Claims

1. A device for measuring a traction, which during a cable laying operation is measured by means of a traction measuring sensor (12) disposed between the cable (10) and a steel traction rope (11), the traction sensor comprising a traction gauge (14) and a measuring circuit (1) which amplifies the signals received by the traction gauge and converts the same into frequency-modulated traction-proportional measuring signals which are fed to a measurement receiver (22) conventionally disposed in the area of a winch (20), a first line to the measurement receiver (22) including the traction rope (11) and a second line including the earth (24), and in which the measurement signals fed via the second line are capacitatively transmitted to the earth via a first capacitor which includes the earth as an electrode, characterised by a second capacitor ($C_1$) which is formed by the earth, on the one hand, and, on the other hand, by an electrode (26) which is insulated from the earth and adapted to be placed on the earth, via which second capacitor ($C_1$) capacitative transmission of the measurement signals is effected from the earth to the measurement receiver (22).

2. A device according to claim 1, characterised in that another electrode of the first capacitor ($C_2$) is formed by metal parts of the cable (10).

3. A device according to claim 1 or 2, characterised in that the carrier frequency of the measurement signal is between 3 and 100 kHz.

4. A device according to at least one of claims 1 to 3, characterised in that the cable (10) is enclosed over part of its length in an electrically conductive device (23) in the form of a sleeve or netting which is conductively connected to the measuring circuit (22) so that a first capacitance ($C_3$) is formed.

5. A device according to claim 4, characterised in that the device in the form of a sleeve or netting is a metal cable grip (23).

6. A device according to at least one of claims 1 to 5, characterised in that the electrode adapted to be placed on the earth is a plate electrode (26).

7. A device according to claim 6, characterised in that the plate electrode (26) consists of insulated conductive rubber.

8. A device according to claim 6 or 7, characterised in that the plate electrode (26) consists of flexible metal parts embedded in an elastomer.

9. A device according to at least one of claims 6 to 8, characterised in that the capacitatively coupling area of the plate electrode (26) is between 2000 and 20000 cm².

10. A device according to at least one of claims 1, 6 to 9, characterised in that the measurement receiver (22) has only one electrically insulated input and in that the same is connected to the plate electrode (26).

11. A device according to at least one of claims 1 to 10, characterised in that the signal potential transmitted via the traction rope (11) is at the earth potential of the measurement receiver (22).

12. A device according to any one of the preceding claims, characterised in that the earth potential of the measurement receiver (22) is connected to the chassis (21) of the winch (20) and in that the current supply to the measurement receiver (22) is effected directly from a starter accumulator (30) of the traction winch (20).

## Revendications

1. Dispositif de mesure d'une force de traction qui est mesurée pendant une pose de câble à l'aide d'un dynamomètre de traction (12) disposé entre le câble (10) et un câble de traction en acier (11), ledit dynamomètre (12) comprenant un détecteur de force (14) et un circuit de mesure (1) qui amplifie les signaux reçus par le détecteur de force et les convertit en signaux de mesure modulés en fréquence et proportionnels à la force de traction qui sont transmis à un récepteur de valeurs mesurées (22) installé habituellement dans la zone d'un treuil de traction (20), un premier conducteur qui mène au récepteur de valeurs mesurées (22) contenant le câble de traction (11) et un deuxième conducteur la terre (24) et dans lequel les signaux de mesure acheminés par le deuxième conducteur sont transmis capacitivement à la terre par l'intermédiaire d'un premier condensateur contenant la terre sous forme d'électrode, caractérisé par un deuxième condensateur ($C_1$) formé d'une part par la terre et d'autre part par une électrode (26) isolée par rapport à la terre et pouvant être posée sur le sol par l'intermédiaire duquel s'effectue une transmission capacitive des signaux de mesure de la terre au récepteur de valeurs mesurées (22).

2. Dispositif selon la revendication 1, caractérisé en ce qu'une autre électrode du premier condensateur ($C_2$) est formée par des pièces métalliques du câble (10).

3. Dispositif selon la revendication 1 ou 2, caractérisé en ce que la fréquence porteuse du signal de mesure est comprise entre 3 et 100 kHz.

4. Dispositif selon au moins l'une des revendications 1 à 3, caractérisé en ce que le câble (10) est entouré sur une partie de sa longueur par un dispositif électroconducteur (23) en forme de manchon ou de grille qui est en liaison conductrice avec le circuit de mesure (22), une première capacité (C₃) étant ainsi formée.

5. Dispositif selon la revendication 4, caractérisé en ce que le dispositif en forme de manchon ou de grille est un grip de câble métallique (23).

6. Dispositif selon au moins l'une des revendications 1 à 5, caractérisé en ce que l'électrode pouvant être posée sur le sol est une électrode à plaque (26).

7. Dispositif selon la revendication 6, caractérisé en ce que l'électrode à plaque (26) est en caoutchouc isolé conducteur.

8. Dispositif selon la revendication 6 ou 7, caractérisé en ce que l'électrode à plaque (26) est constituée de pièces métalliques flexibles enrobées dans un élastomère.

9. Dispositif selon au moins l'une des revendications 6 à 8, caractérisé en ce que la surface de couplage capacitif de l'électrode à plaque (26) représente entre 2000 et 20000 cm².

10. Dispositif selon au moins l'une des revendications 1 et 6 à 9, caractérisé en ce que le récepteur de valeurs mesurées (22) ne possède qu'une entrée électriquement isolée et que cette entrée est reliée à l'électrode à plaque (26).

11. Dispositif selon au moins l'une des revendications 1 à 10, caractérisé en ce que le potentiel du signal transmis par le câble de traction (11) est au potentiel à la masse du récepteur de valeurs mesurées (22).

12. Dispositif selon au moins l'une des revendications précédentes, caractérisé en ce que le potentiel à la masse du récepteur de valeurs mesurées (22) est relié au châssis existant (21) du treuil de traction (20) et en ce que l'alimentation électrique du récepteur de valeurs mesurées (22) s'effectue directement à partir d'un accumulateur de démarrage (30) du treuil de traction (20).

Fig.1

EP 0 305 484 B1

Pol B

Pol A

14    15    16

DMS

U / F

17    18

1

2

3

4

5

6

12

Fig.2